# EUROPÄISCHE PATENTSCHRIFT

(11) **EP 2 697 324 B1**
(45) Veröffentlichungstag und Bekanntmachung des Hinweises auf die Patenterteilung: **13.06.2018**
(21) Anmeldenummer: 12713704.0
(22) Anmeldetag: 04.04.2012
(51) Int. Cl.: C09J 4/00, C09J 133/00

(54) **HAFTKLEBSTOFFDISPERSION ENTHALTEND POLYMERE MIT UREIDOGRUPPEN ODER UREIDO-ANALOGEN GRUPPEN UND MIT GLYCIDYLGRUPPEN**
PRESSURE SENSITIVE ADHESIVE DISPERSION COMPRISING POLYMERS HAVING UREIDO GROUPS OR UREIDO-ANALOG GROUPS AND HAVING GLYCIDYL GROUPS
DISPERSION D'ADHÉSIF DE CONTACT CONTENANT DES POLYMÈRES COMPORTANT DES GROUPES URÉIDO OU DES GROUPES ANALOGUES URÉIDO ET COMPORTANT DES GROUPES GLYCIDYLE

(30) Priorität: 15.04.2011 EP 11162533
(43) Veröffentlichungstag der Anmeldung: 19.02.2014
(73) Patentinhaber: BASF SE, 67056 Ludwigshafen am Rhein (DE)
(72) Erfinder: GERST, Matthias, 67487 Maikammer (DE); WULFF, Dirk, 67105 Schifferstadt (DE); HARRER, Heinrich, 67697 Otterberg (DE)
(74) Vertreter: BASF IP Association
(86) Internationale Anmeldenummer: PCT/EP2012/056130
(87) Internationale Veröffentlichungsnummer: WO 2012/139941

(56) Entgegenhaltungen:
- EP-A2- 0 710 680
- WO-A2-01/54896
- CN-A- 101 875 828
- DE-A1- 4 439 457
- DE-A1- 10 342 616
- JP-A- 2005 120 164

## Beschreibung

Die Erfindung betrifft eine Haftklebstoffdispersion enthaltend ein in Wasser dispergiertes, durch Emulsionspolymerisation gebildetes Polymer P1, gebildet aus einem Monomerengemisch, enthaltend bestimmte C4 bis C20 Alkyl(meth)acrylate, bestimmte (Meth)acrylatmonomere mit Ureidogruppen oder Ureido- analogen Substituenten, Säuremonomere und optional weitere Monomere, wobei das Monomerengemisch entweder außerdem Glycidyl(meth)acrylat enthält und/oder die Haftklebstoffdispersion mindestens ein weiteres Polymer P2 enthält, welches Glycidylgruppen aufweist.

Bei Haftklebstoffen ist sowohl eine gute Haftung zum Substrat (Adhäsion) gewünscht als auch eine ausreichende innere Festigkeit in der Klebstoffschicht (Kohäsion). Bei Adhäsion und Kohäsion handelt es sich um entgegengesetzte anwendungstechnische Eigenschaften. Maßnahmen, die eine Verbesserung der Adhäsion bewirken, führen im Allgemeinen gleichzeitig zu einer Verschlechterung der Kohäsion und umgekehrt. Viele Haftklebstoffe haben zwar bei Raumtemperatur eine ausreichend hohe Kohäsion, nicht jedoch bei erhöhten Temperaturen. Bei vielen Anwendungen, insbesondere bei Klebebändern zur Fixierung von Bauteilen, z.B. im Automobilbereich oder im Baubereich wird aber eine hohe Kohäsion auch bei höheren Temperaturen gewünscht, ohne dass die Adhäsion allzu stark beeinträchtigt wird.

In der WO 01/54896 und in der EP 822206 werden Haftklebstoffe beschrieben, welche durch Emulsionspolymerisation erhältliche Polymere enthalten, die u.a. aus (Meth)acrylmonomeren mit einer Ureidogruppe hergestellt sind. Diese Polymere führen gegenüber Polymeren ohne Ureidogruppen zu einer verbesserten Scherfestigkeit (Kohäsion) und zu einer verbesserten Haftung auch bei erhöhten Temperaturen. Es ist aber wünschenswert, die Wärmestandfestigkeit von Klebeprodukten auf Acrylatpolymerbasis weiter zu verbessern. Wässrige Polymerisatdispersionen, die u.a. aus (Meth)acrylmonomeren mit einer Ureidogruppe hergestellt sind, werden auch in der EP 710680 beschrieben, aber es handelt sich nicht um Haftklebstoffe. In der JP 2005-120164 A wird ein Polymer für eine Rostschutzbeschichtungszusammensetzung beschrieben, wobei das Polymer u.a. aus einem Monomer mit Glycidylgruppen gebildet wird. In der DE 4439457 A1 wird eine wässrige Polymerisatdispersion beschrieben, die ein dispergiertes Polymerisat und eine Polyaldehydverbindung enthält, wobei das Polymerisat zweistufig hergestellt wird und Ureidogruppen aufweist. In der CN 101875828 A und in der DE 10342616 A1 wird jeweils die Verwendung von Glycidylgruppen aufweisenden Monomeren zur Herstellung von Polymeren zur Verwendung in bestimmten Klebstoffzusammensetzungen beschrieben.

Aufgabe der vorliegenden Erfindung war es, die Klebeeigenschaften von Haftklebstoffen, insbesondere für Klebebänder zur Fixierung von Bauteilen weiter zu verbessern und eine noch bessere Temperaturbeständigkeit der Klebeeigenschaften zu erreichen. Insbesondere sollen die Haftklebstoffe eine gute Kohäsion auch bei erhöhten Temperaturen aufweisen, wobei die Adhäsion nicht allzu sehr beeinträchtigt wird oder sogar erhöht wird. Demgemäß wurden die unten näher beschriebenen Haftklebstoffdispersionen gefunden.

Gegenstand der Erfindung ist eine Haftklebstoffdispersion, enthaltend mindestens ein in Wasser dispergiertes Polymer P1, welches gebildet ist durch Emulsionspolymerisation aus einem Monomergemisch, enthaltend
(a) mindestens 60 Gew.% mindestens eines C4 bis C20 Alkyl(meth)acrylats, welches, wenn es als Homopolymer polymerisiert ist, eine Glasübergangstemperatur von -30 °C oder weniger, vorzugsweise -40 °C oder weniger aufweist,
(b) mindestens 0,05 Gew.% mindestens eines (Meth)acrylatmonomeren mit einem Substituenten der Formel 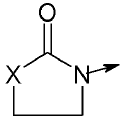 wobei X für CH₂, O, NH oder NR steht und R für eine C1 bis C4-Alkylgruppe steht,
(c) mindestens 0,1 Gew.% mindestens eines Säuremonomers,
und wobei entweder das Monomerengemisch mindestens 0,05 Gew.% Glycidyl(meth)acrylat enthält und/oder
wobei die Haftklebstoffdispersion mindestens ein weiteres, vom Polymer P1 verschiedenes Polymer P2 enthält, welches Glycidylgruppen aufweist,
wobei die Angaben der Monomermengen jeweils auf die Summe aller Monomere bezogen sind. Die erfindungsgemäße Haftklebstoffdispersion enthält als wesentlichen Bestandteil ein Polymer, welches durch Emulsionspolymerisation hergestellt wird; bei dem dispergierten Polymer handelt es sich daher um ein Emulsionspolymerisat.

Im Folgenden wird die Bezeichnung (Meth)acrylat und ähnliche Bezeichnungen als abkürzende Schreibweise verwendet für "Acrylat oder Methacrylat".

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck. Eine Haftklebstoffdispersion ist eine Zusammensetzung, welche ein in Wasser oder in wässrigem Medium dispergiertes Polymer mit haftklebrigen Eigenschaften enthält.

Das Polymer P1 wird aus einer ersten Monomerart (a) hergestellt. Die Monomerart (a) ist zu mindestens 60 Gew.-%, z.B. von 60 bis 95 Gew.%, bezogen auf die Gesamtmenge der zur Herstellung des Polymers P1 eingesetzten Monomere, enthalten. Die Monomere (a) sind ausgewählt aus denjenigen der C4 bis C20 Alkyl(meth)acrylate, welche, wenn sie als Homopolymere polymerisiert sind, eine Glasübergangstemperatur von -30 °C oder weniger oder -40 °C oder weniger, vorzugsweise von -45°C oder weniger aufweisen. Die Glasübergangstemperatur lässt sich durch bekannte Methoden z.B. Differential Scanning Calorimetrie (s. z.B. ASTM 3418/82, sog. "midpoint temperature") bestimmen. Als Monomere (a) bevorzugt sind C₄- bis C₁₀-Alkylacrylate und C₄- bis C₁₀-Alkylmethacrylate, insbesondere C₄- bis C₈-Alkylacrylate und -methacrylate. Ganz besonders bevorzugt sind n-Butylacrylat, n-Hexylacrylat, Octylacrylat und 2-Ethylhexylacrylat oder auch Butadien sowie Mischungen dieser Monomere.

Das Polymer P1 wird aus einer zweiten Monomerart (b) hergestellt. Die Monomerart (b) ist zu mindestens 0,05 Gew.%, z.B. von 0,1 bis 5 Gew.%, vorzugsweise größer 1 Gew.%, z.B. von 1,5 bis 5 Gew.%, bezogen auf die Gesamtmenge der zur Herstellung des Polymers P1 eingesetzten Monomere, enthalten.

Monomerart (b) ist ein (Meth)acrylatmonomer mit einem Substituenten der Formel 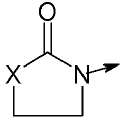 wobei X für CH₂, O, NH oder NR steht und R für eine C1 bis C4-Alkylgruppe steht und der Pfeil am N-Atom die Verknüpfungsstelle des Substituenten an das (Meth)acrylatmonomer bedeutet. Im Falle von X gleich NH oder NR handelt es sich um ein Monomer mit einer Ureidogruppe. Im Falle von X gleich O oder CH₂ werden die Monomere als Monomere mit einer ureido-analogen Gruppe bezeichnet.

Monomere (b) sind z.B. solche der Formel 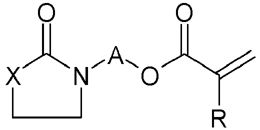 wobei X die oben angegebenen Bedeutung hat, R für Wasserstoff oder Methyl steht und A für eine divalente Verbindungsgruppe steht, vorzugsweise für eine C1 bis C10-Alkylgruppe oder für eine C2 bis C4-Alkylgruppe. Besonders bevorzugt sind Ureidoalkyl(meth)acrylate mit 1 bis 10 C-Atomen, vorzugsweise 2 bis 4 C-Atomen in der Alkylgruppe, insbesondere Ureidoethylmethacrylat (UMA).

Das Polymer P1 wird zu mindestens 0,1 Gew.%, vorzugsweise in Mengen von 0,1 bis 5, besonders bevorzugt 0,2 bis 4, ganz besonders bevorzugt 0,5 bis 3 Gew. %, bezogen auf die Gesamtmenge an Monomeren des Polymers P1, aus Säuremonomeren gebildet. Säuremonomere sind ethylenisch ungesättigte, radikalisch polymerisierbare Monomere, welche mindestens eine Säuregruppe aufweisen. Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha, beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure.

Das Monomerengemisch zur Bildung des Polymers P1 kann optional weitere, von den monomeren (a)-(c) verschiedene Monomere (d) enthalten, d.h. die Monomere (d) sind Monomere, welche, wenn sie als Homopolymere polymerisiert sind, eine Glasübergangstemperatur von mehr als -30 °C, insbesondere von mehr als -20°C, mehr als 0°C oder mehr als 20 °C aufweisen. Unter diesen Voraussetzungen können die Monomere (d) ausgewählt sein aus von den Monomeren (a) verschiedenen C1 bis C20 Alkyl(meth)acrylaten, C1 bis C20 Hydroxyalkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Die Monomere (d) werden vorzugsweise in Mengen von 1 bis 40 Gew.%, insbesondere von 2 bis 30 Gew.%, bezogen auf die Gesamtmenge an Monomeren des Polymers P1, eingesetzt. Zu nennen sind z. B. (Meth)acrylsäurealkylester mit einem C1-C10-Alkylrest, wie Methylmethacrylat, Methylacrylat, Ethylacrylat, Ethylmethacrylat. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Isopren und Chloropren genannt. Als weitere Monomere besonders bevorzugt sind Methylacrylat, Methylmethacrylat, Ethylacrylat, Styrol, C1-C10-Hydroxyalkyl(meth)acrylate und (Meth)acrylamid sowie Mischungen dieser Monomere. In einer Ausführungsform werden 0- 5 Gew.%, vorzugsweise 0,05 bis 5 Gew.% an C1-C10-Hydroxyalkyl(meth)acrylaten verwendet.

Die erfindungsgemäße Haftklebstoffdispersion enthält mindestens ein Polymer, welches u.a. aus mindestens einem Monomer mit mindestens einer Glycidylgruppe gebildet ist. In einer Ausführungsform der Erfindung ist das Polymer P1 aus mindestens einem Monomer (e) mit mindestens einer Glycidylgruppe gebildet. In einer anderen Ausführungsform der Erfindung handelt es sich um ein Polymerblend aus mindestens einem Polymer P1 und mindestens einem Polymer P2, wobei das Polymer P1 nicht aus Monomeren (e) gebildet ist und das Polymer P2 aus mindestens einem Monomer (e) und optional weiteren Monomeren, aber nicht aus Monomeren des Typs (b) gebildet ist. Selbstverständlich ist auch ein Polymerblend von Polymeren P1 und P2 möglich, wobei sowohl P1 als auch P2 aus Monomeren (e) gebildet sind.

Bevorzugte Monomere (e) mit Glycidylgruppe sind Glycidyl(meth)acrylat (2,3-Epoxypropyl-(meth)acrylat). Besonders bevorzugt ist Glycidylmethacrylat (GMA). Wenn das Monomer (e) Bestandteil des Monomerengemisches zur Bildung des Polymers P1 ist, so liegt es vorzugsweise in einer Menge von 0,1 bis 5 Gew.%, insbesondere von 0,5 bis 3 Gew.% , bezogen auf die Gesamtmenge an Monomeren des Polymers P1, vor. Wenn das Monomer (e) Bestandteil des Monomerengemisches zur Bildung des Polymers P2 ist, so liegt es vorzugsweise in einer Menge von 1 bis 20 Gew.%, insbesondere von 5 bis 15 Gew.% bezogen auf die Gesamtmenge an Monomeren des Polymers P2, vor.

Ein bevorzugtes Polymer P1 ist z. B. wie folgt aufgebaut aus:
60 bis 95 Gew. % der Monomeren (a)
0,1 bis 5 Gew. % der Monomeren (b)
0,1 bis 5 Gew. % der Säuremonomeren (c)
2 bis 30 Gew. % der weiteren Monomeren (d) und
0,1 bis 5 Gew.% Glycidyl(meth)acrylat.

Ein besonders bevorzugtes Polymer P1 ist z. B. wie folgt aufgebaut aus:
75 bis 90 Gew. % der Monomeren (a)
0,5 bis 3 Gew. % der Monomeren (b)
0,5 bis 2 Gew. % der Säuremonomeren (c)
2 bis 20 Gew. % der weiteren Monomeren (d) und
0,5 bis 3 Gew.% Glycidyl(meth)acrylat.

Die Glasübergangstemperatur des Polymers P1 beträgt vorzugsweise -60 bis 0°C, besonders bevorzugt -60 bis -10°C und ganz besonders bevorzugt -60 bis -20°C.

Die Glasübergangstemperatur lässt sich nach üblichen Methoden wie Differential Scanning Calorimetrie (ASTM 3418/82, sog. "midpoint temperature") bestimmen.

Ein bevorzugtes Polymer P2 ist z. B. wie folgt aufgebaut aus:
80 bis 99 Gew. % der Monomeren (a) und (d)
0,1 bis 5 Gew. % der Säuremonomeren (c)
1 bis 20 Gew.% Glycidyl(meth)acrylat.

In einer Ausführungsform der Erfindung ist das Polymer P2 gebildet durch Polymerisation aus einem Monomergemisch, enthaltend die Monomeren (a), die Monomeren (c), Glycidyl(meth)-acrylat und optional die Monomeren (d) in den für Polymer P1 genannten Mengen.

Vorzugsweise liegt das Gewichtsverhältnis des Monomers (b) (z.B. UMA) zur Menge des Monomers (e) (z.B. GMA) bzw. zur Summe der für P1 und P2 verwendeten Monomere (e) bei 0,1 bis 10, besonders bevorzugt bei 0,2 bis 5.

Die Herstellung der Polymere P1 und P2 kann durch Emulsionspolymerisation erfolgen, es handelt sich dann um Emulsionspolymerisate, wobei die oben genannten ethylenisch ungesättigten, radikalisch polymerisierbaren Monomere durch radikalisch initiierte Emulsionspolymerisation in Wasser polymerisiert werden. Um die Dispergierung der Monomeren in dem wässrigen Medium zu unterstützen, kann man die üblicherweise als Dispergiermittel eingesetzten Schutzkolloide und/oder Emulgatoren verwenden.

Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen sowohl anionische, kationische als auch nichtionische grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol , insbesondere von 5000 bis 50000 g/mol. Vorzugsweise werden anionische und nichtionische Emulgatoren als grenz-flächenaktive Substanzen verwendet. Geeignete Emulgatoren sind beispielsweise ethoxylierte C₈- bis C₃₆-Fettalkohole mit einem Ethoxylierungsgrad von 3 bis 50, ethoxylierte Mono-, Di- und Tri- C₄- bis C₁₂-Alkylphenole mit einem Ethoxylierungsgrad von 3 bis 50, Alkalimetallsalze von Dialkylestern der Sulfobernsteinsäure, Alkalimetall- und Ammoniumsalze von C₈- bis C₁₂-Alkylsulfaten, Alkalimetall- und Ammoniumsalze von C₁₂- bis C₁₈-Alkylsulfonsäuren und Alkalimetall- und Ammoniumsalze von Cg- bis C₁₈-Alkylarylsulfonsäuren. Kationaktive Emulgatoren sind z.B. Verbindungen mit mindestens einer Amino- oder Ammoniumgruppe und mindestens einer C8-C22-Alkylgruppe. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren. Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25. Die grenzflächenaktive Substanz wird üblicherweise in Mengen von 0,1 bis 10 Gew.-%, bezogen auf die zu polymerisierenden Monomeren verwendet.

Bei der Emulsionspolymerisation werden üblicherweise wasserlösliche Initiatoren für die radikalische Polymerisation der Monomere verwendet. Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert.-Butylhydroperoxid. Geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können auch Polymerisationsregler, kurz Regler, eingesetzt werden. Regler bewirken eine Kettenabbruchsreaktion und verringern somit das Molgewicht des Polymeren. Die Regler werden dabei an das Polymer gebunden, im Allgemeinen an das Kettenende. Die Menge der Regler kann insbesondere 0,05 bis 4 Gew. Teile, besonders bevorzugt 0,05 bis 0,8 Gew.-Teile und ganz besonders bevorzugt 0,1 bis 0,6 Gew. Teile, bezogen auf 100 Gew.-Teile der zu polymerisierenden Monomeren betragen. Geeignete Regler sind insbesondere Verbindungen mit einer Mercaptogruppe wie tert.-Butylmercaptan, Thioglycolsäureethylester, Mercaptoethynol, Mercaptopropyltrimethoxysilan oder tert.-Dodecylmercaptan. Bei den Reglern handelt es sich im Allgemeinen um niedermolekulare Verbindungen mit einem Molgewicht kleiner 2000, insbesondere kleiner 1000 g/mol.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol, Ethanol oder Tetrahydrofuran bestehen. Vorzugsweise wird nur Wasser verwendet.

Die Monomerzufuhr kann als Batchprozess, kontinuierlich oder stufenweise erfolgen. Das Zulaufverfahren kann in Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt. Falls ein Molekulargewichtsregler verwendet wird, kann auch der Regler zum Teil vorgelegt werden, ganz oder teilweise während der Polymerisation oder gegen Ende der Polymerisation zugegeben werden.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81 083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Die Monomeren werden vorzugsweise zumindest teilweise während der Polymerisation kontinuierlich zugegeben. Zum Teil können Monomere auch im Polymerisationsgefäß vor Beginn der Polymerisation vorgelegt werden. Vorzugsweise werden maximal 30 Gew. % der Gesamtmenge der Monomeren, besonders bevorzugt maximal 20 Gew. %, ganz besonders bevorzugt maximal 10 Gew. % der Monomeren im Polymerisationsgefäß vorgelegt. Die übrigen Monomeren, d.h. vorzugsweise mindestens 70 Gew. %, besonders bevorzugt mindestens 80 Gew. %, ganz besonders bevorzugt mindestens 90 Gew. % werden während der Polymerisation kontinuierlich zugegeben. In einer besonderen Ausführungsform werden keine Monomeren vorgelegt, d.h. die Gesamtmenge der Monomere wird während der Polymerisation zugefahren. Die einzelnen Komponenten können dem Reaktor beim Zulaufverfahren von oben, in der Seite oder von unten durch den Reaktorboden zugegeben werden.

In einer Ausführungsform erfolgt die Herstellung von Polymer P1 mindestens zweistufig, wobei in einer ersten Polymerisationsstufe die Menge an Monomer (b) größer ist als die Mengen an Glycidyl(meth)acrylat und in einer späteren Polymerisationsstufe die Menge an Monomer (b) kleiner ist als die Menge an Glycidyl(meth)acrylat, d.h. das Glycidylmonomer (e) überwiegend (d.h. zu mehr als der Hälfte) oder vollständig erst in der zweiten Polymerisationsstufe eingesetzt wird. In einer anderen Ausführungsform erfolgt die Herstellung von Polymer P1 einstufig, wobei die Monomere (a) bis (e) gleichzeitig polymerisiert werden.

Zur Entfernung der Restmonomeren kann auch nach dem Ende der eigentlichen Emulsionspolymerisation, d. h. nach einem Umsatz aller Monomeren weiterer Initiator zugesetzt werden (chemische Desodorierung). Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Das so hergestellte Polymer wird vorzugsweise in Form seiner wässrigen Dispersion verwendet.

Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 200 nm. Besonders bevorzugt liegt die mittlere Teilchengröße zwischen 140 und 200 nm. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt.

Die erfindungsgemäße Haftklebstoffdispersion kann Additive enthalten. Die Additive sind z.B. ausgewählt aus Füllstoffen, Farbstoffen, Verlaufshilfsmitteln, Verdickern, vorzugsweise Assoziativverdicker, Entschäumer, Weichmachern, Pigmenten, Netzmitteln, UV-Schutzmitteln und Tackifiern. Für eine bessere Benetzung von Oberflächen können die Haftklebstoffe insbesondere Benetzungshilfsmittel, z. B. Fettalkoholethoxylate, Alkylphenolethoxylate, Sulfobernsteinsäureester, Nonylphenolethoxylate, Polyoxyethylene/-propylene oder Natriumdodecylsulfonate enthalten. Die Menge beträgt im allgemeinen 0,05 bis 5 Gew.-Teile, insbesondere 0,1 bis 3 Gew.-Teile auf 100 Gew.-Teile Polymer (fest).

Tackifier sind dem Fachmann an sich bekannt. Es handelt sich dabei um Zusatzstoffe für Klebstoffe oder Elastomere, die deren Autoadhäsion (Tack, Eigenklebrigkeit, Selbsthaftung) erhöhen. Sie haben in der Regel eine relativ niedrige Molmasse (Mn ca. 200 - 2000 g/mol), eine Glasübergangstemperatur, die oberhalb derjenigen der Elastomere liegt und eine ausreichende Verträglichkeit mit diesen, d.h. die Tackifier lösen sich zumindest teilweise in aus den Elastomeren gebildeten Polymerfilmen. Die Gewichtsmenge der Tackifier beträgt vorzugsweise 5 bis 100 Gew.-Teile, besonders bevorzugt 10 bis 50 Gew.-Teile, bezogen auf 100 Gew.-Teile Polymer (fest/fest). Geeignete Tackifier sind z.B. solche auf Basis von Naturharzen, wie z.B. Kolophoniumharze. Tackifier auf Basis von Naturharzen umfassen die Naturharze selber sowie deren beispielsweise durch Disproportionierung oder Isomerisierung, Polymerisation, Dimerisation oder Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit. Des weiteren finden auch Phenol-Harze, Kohlenwasserstoffharze, z.B. Cumaron-Inden-Harze, Polyterpen-Harze, Terpen-Oligomere, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung als Tackifier. Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈-Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten.

Erfindungsgemäße Haftklebstoffdispersionen können zur Herstellung von Klebstoffartikeln, bzw. selbstklebend ausgerüsteten Artikeln verwendet werden. Bei dem Klebstoffartikel kann es sich um ein Etikett handeln. Ein bevorzugtes Etikett ist ein selbstklebendes Papieretikett oder Folienetikett, wobei der Klebstoff auf Papier oder auf eine Folie als Trägermaterial aufgetragen ist. Bei dem Klebstoffartikel kann es sich auch um ein Klebeband handeln, wobei der Klebstoff auf einem bandförmigen Trägermaterial aufgetragen ist. Bei dem Trägermaterial des Klebebandes kann es sich um Gewebe, Vliese, Folien, Papier, Filze, Schaumstoffe und Coextrudate oder Kombinationen davon handeln. Anwendungsgebiete sind trägerlose, einseitige und doppelseitige Klebebänder, medizinische Klebebänder, Verpackungsklebebänder, Kabelwickelbänder, Teppichverlegebänder, Montageklebebänder, Klebebänder zur Fixierung von Dachunterspannbahnen, selbstklebend ausgerüstete Trägermaterialien wie z.B. Schaumstoffe, Bitumenplatten und ähnliches. Gegenstand der Erfindung ist daher auch die Verwendung erfindungsgemäßer Haftklebstoffdispersionen zur Herstellung von selbstklebenden Artikeln, insbesondere zur Herstellung von Klebebändern zur Fixierung von Bauteilen, insbesondere im Automobilbau, für Elektronikartikel oder bei Bauanwendungen.

Zur Herstellung der Klebstoffartikel kann eine Klebstoffschicht auf das Trägermaterial in üblicher Weise aufgebracht werden, z. B. durch Rollen, Rakeln, Streichen etc. Im Falle der Verwendung einer wässrigen Klebstoffdispersion kann das Wasser durch Trocknung bei z.B. 50 bis 150°C entfernt werden. Die so erhaltenen, beschichteten Substrate werden z.B. als Selbstklebeartikel, wie Etiketten, Klebebänder oder Folien verwendet. Die Träger können hierzu vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Gegenstand der Erfindung ist auch ein Klebeband, welches mindestens eine Trägerschicht aufweist und ein- oder beidseitig mit mindestens einer erfindungsgemäßen Haftklebstoffdispersion beschichtet ist. Bevorzugte Trägermaterialien für die Herstellung von Klebebändern sind Polyethylen (PE), orientiertes Polypropylen (oPP), Polyethylenterephtalat (PET), PE-Schaum und Polyurethan-Schaum (PU-Schaum).

Für die Herstellung von Klebebändern ist das auf Feststoffgehalt bezogene Auftragsgewicht der Haftklebstoffdispersion vorzugsweise mindestens 20 g/m² oder mindestens 30 g/m², z.B. 60 bis 80 g/m².

In einer Ausführungsform der Erfindung handelt es sich umein Klebeband, bei welchem das Material der Trägerschicht ausgewählt ist aus PE, oPP, PET, PE-Schaum oder PU-Schaum und/oder das Klebeband mindestens eine die Klebstoffschicht abdeckende, ablösbare Schutzschicht aufweist.

Die erfindungsgemäßen Klebeartikel haben sehr gute Klebeeigenschaften, insbesondere eine gute Wärmestandfestigkeit.

### Beispiele

### Einsatzstoffe:

- nBA: n-Butylacrylat
- MMA: Methylmethacrylat
- UMA: Ureidomethacrylat (2-(2-Oxoimidazolidin-1-yl)ethylmethacrylat)
- AS: Acrylsäure
- HPA: 2-Hydroxypropylacrylat
- Saat: 30 nm Styrolsaat
- GMA: Glycidylmethacrylat (2,3-Epoxypropylmethacrylat)

### Beispiel 1

Es wurden nicht-erfindungsgemäße Haftklebstoffdispersionen D1 bis D3 durch Emulsionspolymerisation aus den in Tabelle 1 wiedergegebenen Monomerzusammensetzungen hergestellt.

**Tabelle 1: Monomerzusammensetzungen zur Herstellung der Haftklebstoffdispersionen D1 bis D3, Mengenangaben in Gewichtsteilen**

| | D1 | D2 | D3 |
|---|---|---|---|
| Saat | 0,4 | 0,4 | 0,4 |
| nBA | 87,75 | 87,75 | 87,75 |
| MMA | 7,8 | 6,8 | 5,85 |
| UMA | - | 1,0 | 1,95 |
| AS | 1,5 | 1,5 | 1,5 |
| Styrol | 1,0 | 1,0 | 1,0 |
| HPA | 1,95 | 1,95 | 1,95 |

### Anwendungstechnische Prüfungen:

Die Haftklebstoffe wurden mit einer Auftragsmenge von 75 g/m² auf PET-Folie Hostaphan® RN 36 als Träger beschichtet und 5 Minuten bei 90°C getrocknet. Der mit Haftklebstoff beschichtete Träger wurde in 25 mm breite Prüfstreifen geschnitten.

### a) Scherfestigkeit

Zur Bestimmung der Scherfestigkeit wurden die Prüfstreifen mit einer verklebten Fläche von 25 x 25 mm auf Stahlblech geklebt, mit einer 1 kg schweren Rolle 1 mal angerollt und anschließend hängend mit einem 1 kg Gewicht belastet. Die Scherfestigkeit (Kohäsion) wurde bei Normklima (23°C; 50% rel. Luftfeuchtigkeit) und bei 70°C bestimmt. Das Maß für die Scherfestigkeit ist die Zeit in Stunden bis zum Abfallen des Gewichts; es wurde jeweils der Durchschnitt aus 5 Messungen berechnet.

### b) S.A.F.T.-Test

Die Prüfstreifen wurden mit einer verklebten Fläche von 25 x 25 mm auf AFERA-Stahl geklebt, mit einer 2 kg schweren Rolle 4 mal angerollt und nach mindestens 16 Stunden Kontaktzeit hängend mit einem 1 kg Gewicht belastet. Während der Belastung wurde ausgehend von 23°C kontinuierlich mit einer Rate von 0,5°C / min aufgeheizt. Die beim Abfallen des Gewichtes erreichte Aufheiztemperatur ist ein Maß für die Wärmestandfestigkeit des Klebstoffs. Es wurde jeweils der Durchschnitt aus 3 Messungen berechnet.

Die Testergebnisse sind in Tabelle 2 zusammengefasst.

**Tabelle 2: Testeraebnisse D1-D3**

| | Scherfestigkeit 23°C [Stunden] | Scherfestigkeit 70°C [Stunden] | S.A.F.T.-Test |
|---|---|---|---|
| D1 (ohne UMA) | 0,7 | 0,1 | 38°C |
| D2 (1 pphm UMA) | > 100 | 8,2 | 121°C |
| D3 (2 pphm UMA) | >100 | 4,8 | 121°C |

| | | | |
|---|---|---|---|
| pphm: parts per hundert parts monomer; Gew.-Teile pro 100 Gew.-Teile Monomer | | | |

Die Ergebnisse zeigen, dass die Verwendung eines Monomers des Typs b) zu einer verbesserten, aber noch nicht optimalen Wärmestandfestigkeit des Klebstoffs führen. Eine Erhöhung der Einsatzmenge des Monomers b) führt zu keiner weiteren Verbesserung.

### Beispiel 2

Es wurden die Dispersionen D4 bis D13 hergestellt. Die Gesamtzusammensetzungen sind in Tabellen 3 und 4 zusammengefasst.

### Dispersion D4:

Die nicht-erfindungsgemäße Haftklebstoffdispersion D4 mit monomodaler Teilchenverteilung wurde durch Emulsionspolymerisation aus der in Tabelle 3 wiedergegebenen Monomerzusammensetzung hergestellt.

### Dispersion D5:

Die erfindungsgemäße Haftklebstoffdispersion D5 mit monomodaler Teilchenverteilung wurde durch Emulsionspolymerisation zweistufig hergestellt, indem zunächst 80 Gew.-Teile einer Monomeremulsion 1 und anschließend 20 Gew.-Teile einer Monomeremulsion 2 polymerisiert wurden.
Monomeremulsion 1: 87,5 Gew.-Teile n-BA, 2 Gew.-Teile UMA, 6 Gew.-Teile MMA, 2 Gew.-Teile HPA, 1 Gew.-Teil Styrol, 1,5 Gew.-Teile AS
Monomeremulsion 2: 51 Gew.-Teile n-BA, 10 Gew.-Teile GMA, 37 Gew.-Teile MMA, 2 Gew.-Teile AS

### Dispersion D6:

Wie Dispersion D5, wobei zunächst 90 Gew.-Teile der Monomeremulsion 1 und anschließend 10 Gew.-Teile der Monomeremulsion 2 polymerisiert wurden.

### Dispersion D7:

Die nicht-erfindungsgemäße Haftklebstoffdispersion D7 mit bimodaler Teilchenverteilung wurde hergestellt wie D4, mit dem Unterschied, dass 1,6 pphm zusätzliche Saat nach 60% Monomeremulsionszulauf zugegeben wurden.

### Dispersion D8:

Die erfindungsgemäße Haftklebstoffdispersion D8 mit bimodaler Teilchenverteilung wurde hergestellt wie D5, wobei nach 60% Monomeremulsionszulauf 1,6 pphm zusätzliche Saat zugegeben wurden.

### Dispersion D9:

Die erfindungsgemäße Haftklebstoffdispersion D9 mit bimodaler Teilchenverteilung wurde hergestellt wie D6, wobei nach 60% Monomeremulsionszulauf 1,6 pphm zusätzliche Saat zugegeben wurden.

### Dispersion D10:

### Wie Dispersion D5,

Monomeremulsion 2: 86,5 Gew.-Teile n-BA, 10 Gew.-Teile GMA, 2 Gew.-Teile HPA, 1,5 Gew.Teile AS

### Dispersion D11:

### Wie Dispersion D6,

Monomeremulsion 2: 86,5 Gew.-Teile n-BA, 10 Gew.-Teile GMA, 2 Gew.-Teile HPA, 1,5 Gew.Teile AS

### Dispersion D12:

### Wie Dispersion D8,

Monomeremulsion 2: 86,5 Gew.-Teile n-BA, 10 Gew.-Teile GMA, 2 Gew.-Teile HPA, 1,5 Gew.Teile AS

### Dispersion D13:

### Wie Dispersion D9,

Monomeremulsion 2: 86,5 Gew.-Teile n-BA, 10 Gew.-Teile GMA, 2 Gew.-Teile HPA, 1,5 Gew.Teile AS

**Tabelle 3: Monomerzusammensetzungen zur Herstellung der Haftklebstoffdispersionen D4 bis D13, Mengenangaben in Gewichtsteilen**

| | D4 | D5 | D6 | D7 | D8 | D9 |
|---|---|---|---|---|---|---|
| TGV | monomodal | monomodal | monomodal | bimodal | bimodal | bimodal |
| Saat | 0,4 | 0,4 | 0,4 | 2 | 2 | 2 |
| nBA | 87,75 | 80,4 | 84,1 | 87,75 | 80,4 | 84,1 |
| MMA | 5,85 | 12,1 | 9,0 | 5,85 | 12,1 | 9,0 |
| UMA | 1,95 | 1,56 | 1,76 | 1,95 | 1,56 | 1,76 |
| AS | 1,5 | 1,6 | 1,55 | 1,5 | 1,6 | 1,55 |
| Styrol | 1 | 0,8 | 0,9 | 1 | 0,8 | 0,9 |
| HPA | 1,95 | 1,56 | 1,76 | 1,95 | 1,56 | 1,76 |
| GMA | - | 2 | 1 | - | 2 | 1 |

| | | | | | | |
|---|---|---|---|---|---|---|
| TGV: Modalität der Teilchengrößenverteilung | | | | | | |

**Tabelle 4: Monomerzusammensetzungen zur Herstellung der Haftklebstoffdispersionen D4 bis D13, Mengenangaben in Gewichtsteilen**

| | D10 | D11 | D12 | D13 |
|---|---|---|---|---|
| TGV | monomodal | monomodal | bimodal | bimodal |
| Saat | 0,4 | 0,4 | 2 | 2 |
| nBA | 87,5 | 87,6 | 87,5 | 87,6 |
| MMA | 4,7 | 5,3 | 4,7 | 5,3 |
| UMA | 1,56 | 1,76 | 1,56 | 1,76 |
| AS | 1,5 | 1,5 | 1,5 | 1,5 |
| Styrol | 0,8 | 0,9 | 0,8 | 0,9 |
| HPA | 1,96 | 1,96 | 1,96 | 1,96 |
| GMA | 2 | 1 | 2 | 1 |

| | | | | |
|---|---|---|---|---|
| TGV: Modalität der Teilchengrößenverteilung | | | | |

Die Ergebnisse der Anwendungstests sind in Tabelle 5 zusammengefasst.

**Tabelle 5: Testergebnisse D4-D13**

| | Scherfestigkeit 23°C [Stunden] | Scherfestigkeit 70°C [Stunden] | S.A.F.T.-Test |
|---|---|---|---|
| D4 (ohne GMA) | > 100 | 11,1 | 114°C |
| D5 (2 pphm GMA) | > 100 | > 100 | > 180°C |
| D6 (1 pphm GMA) | > 100 | > 100 | > 180°C |
| D7 (ohne GMA) | > 100 | 5,7 | 110 °C |
| D8 (2 pphm GMA) | > 100 | > 100 | > 180°C |
| D9 (1 pphm GMA) | > 100 | > 100 | > 180°C |
| D10 (2 pphm GMA) | > 100 | > 100 | > 180°C |
| D11 (1 pphm GMA) | > 100 | > 100 | > 180°C |
| D12 (2 pphm GMA) | > 100 | > 100 | > 180°C |
| D13 (1 pphm GMA) | > 100 | > 100 | > 180°C |

Die Ergebnisse zeigen, dass die Verwendung eines Monomers des Typs b) in Kombination mit einem Glycidylgruppen aufweisenden Monomer zu einer deutlich verbesserten Wärmestandfestigkeit des Klebstoffs führt.

## Patentansprüche

1. Haftklebstoffdispersion, enthaltend mindestens ein in Wasser dispergiertes Polymer P1, welches gebildet ist durch Emulsionspolymerisation aus einem Monomergemisch, enthaltend
(a) mindestens 60 Gew.% mindestens eines C4 bis C20 Alkyl(meth)acrylats, welches, wenn es als Homopolymere polymerisiert ist, eine Glasübergangstemperatur von -30 °C oder weniger aufweist,
(b) mindestens 0,05 Gew.% mindestens eines (Meth)acrylatmonomeren mit einem Substituenten der Formel 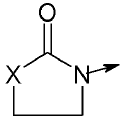 wobei X für CH₂, O, NH oder NR steht und R für eine C1 bis C4-Alkylgruppe steht,
(c) mindestens 0,1 Gew.% mindestens eines Säuremonomers,
und wobei entweder das Monomerengemisch mindestens 0,05 Gew.% Glycidyl-(meth)-acrylat enthält und/oder
wobei die Haftklebstoffdispersion mindestens ein weiteres, vom Polymer P1 verschiedenes Polymer P2 enthält, welches Glycidylgruppen aufweist,
wobei die Angaben der Monomermengen jeweils auf die Summe aller Monomere bezogen sind.

2. Haftklebstoffdispersion gemäß Anspruch 1, **dadurch gekennzeichnet, dass** die Monomeren (a) ausgewählt sind aus n-Butylacrylat, n-Hexylacrylat, Octylacrylat und 2-Ethylhexylacrylat sowie Mischungen dieser Monomere.

3. Haftklebstoffdispersion gemäß einem der vorhergehenden Ansprüche, **dadurch gekennzeichnet, dass** das Monomer (b) Ureidoethylmethacrylat ist.

4. Haftklebstoffdispersion gemäß einem der vorhergehenden Ansprüche, **dadurch gekennzeichnet, dass** die Säuremonomeren (c) ausgewählt sind aus Acrylsäure und Methacrylsäure.

5. Haftklebstoffdispersion gemäß einem der vorhergehenden Ansprüche, **dadurch gekennzeichnet, dass** das Monomerengemisch weitere Monomere (d) enthält, ausgewählt aus von den Monomeren (a) verschiedenen C1 bis C20 Alkyl(meth)acrylaten, C1 bis C20 Hydroxyalkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

6. Haftklebstoffdispersion gemäß einem der vorhergehenden Ansprüche, **dadurch gekennzeichnet, dass** die Monomeren (a) in einer Menge von 60 bis 95 Gew.% die Monomeren (b) in einer Menge von 0,1 bis 5 Gew.%, die Monomeren (c) in einer Menge von 0,1 bis 5 Gew.%, die weiteren Monomeren (d) in einer Menge von 2 bis 30 Gew.% und Glycidyl(meth)acrylat in einer Menge von 0,1 bis 5 Gew.% vorliegen.

7. Haftklebstoffdispersion gemäß einem der vorhergehenden Ansprüche, **dadurch gekennzeichnet, dass** die Dispersion Additive enthält, ausgewählt aus Füllstoffen, Farbstoffen, Verlaufshilfsmitteln, Verdickern, Entschäumer, Weichmachern, Pigmenten, Netzmitteln, UV-Schutzmitteln und Tackifiern.

8. Haftklebstoffdispersion gemäß einem der vorhergehenden Ansprüche, **dadurch gekennzeichnet, dass** das Polymer P2 gebildet ist durch Polymerisation aus einem Monomergemisch, enthaltend die Monomeren (a), die Monomeren (c), Glycidyl(meth)acrylat und optional die Monomeren (d) in den für Polymer P1 genannten Mengen.

9. Haftklebstoffdispersion gemäß einem der vorhergehenden Ansprüche, **dadurch gekennzeichnet, dass** die Herstellung des Polymers P1 mindestens zweistufig erfolgt, wobei in einer ersten Polymerisationsstufe die Menge an Monomer (b) größer ist als die Mengen an Glycidyl(meth)acrylat und einer späteren Polymerisationsstufe die Menge an Monomer (b) kleiner ist als die Menge an Glycidyl(meth)acrylat.

10. Klebeband welches mindestens eine Trägerschicht aufweist und ein- oder beidseitig mit mindestens einer Haftklebstoffdispersion gemäß einem der vorhergehenden Ansprüche beschichtet ist.

11. Klebeband nach dem vorhergehenden Anspruch, **dadurch gekennzeichnet, dass** das auf Feststoffgehalt bezogene Auftragsgewicht der Haftklebstoffdispersion mindestens 30 g/m² beträgt.

12. Klebeband nach einem der beiden vorhergehenden Ansprüche, **dadurch gekennzeichnet, dass** das Material der Trägerschicht ausgewählt ist aus Polyethylen, orientiertem Polypropylen, Polyethylenterephtalat, PE-Schaum und Polyurethan-Schaum und/oder das Klebeband mindestens eine die Klebstoffschicht abdeckende, ablösbare Schutzschicht aufweist.

13. Verwendung einer Haftklebstoffdispersion nach einem der Ansprüche 1 bis 9 zur Herstellung von selbstklebenden Artikeln.

14. Verwendung einer Haftklebstoffdispersion nach einem der Ansprüche 1 bis 9 oder eines Klebebandes nach einem der Ansprüche 10 bis 12 zur Fixierung von Bauteilen, insbesondere im Automobilbau, für Elektronikartikel oder bei Bauanwendungen.

## Claims

1. A pressure-sensitive adhesive dispersion comprising at least one water-dispersed polymer P1 formed by emulsion polymerization from a monomer mixture comprising
(a) at least 60% by weight of at least one C4 to C20 alkyl (meth)acrylate which when polymerized as a homopolymer has a glass transition temperature of -30°C or less,
(b) at least 0.05% by weight of at least one (meth)acrylate monomer having a substituent of the formula 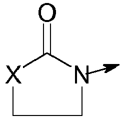 where X is CH₂, O, NH or NR and R is a C1 to C4 alkyl group,
(c) at least 0.1% by weight of at least one acid monomer,
and where alternatively the monomer mixture comprises at least 0.05% by weight of glycidyl (meth)acrylate and/or
where the pressure-sensitive adhesive dispersion comprises at least one further polymer P2, different from polymer P1, and containing glycidyl groups,
the figures for the monomer amounts being based in each case on the sum of all monomers.

2. The pressure-sensitive adhesive dispersion according to claim 1, wherein the monomers (a) are selected from n-butyl acrylate, n-hexyl acrylate, octyl acrylate, and 2-ethylhexyl acrylate, and mixtures of these monomers.

3. The pressure-sensitive adhesive dispersion according to either of the preceding claims, wherein the monomer (b) is ureidoethyl methacrylate.

4. The pressure-sensitive adhesive dispersion according to any of the preceding claims, wherein the acid monomers (c) are selected from acrylic acid and methacrylic acid.

5. The pressure-sensitive adhesive dispersion according to any of the preceding claims, wherein the monomer mixture comprises further monomers (d) selected from the non- (a) monomers C1 to C20 alkyl (meth)acrylates, C1 to C20 hydroxyalkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, or mixtures of these monomers.

6. The pressure-sensitive adhesive dispersion according to any of the preceding claims, wherein the monomers (a) are present in an amount of 60% to 95% by weight, the monomers (b) in an amount of 0.1% to 5% by weight, the monomers (c) in an amount of 0.1% to 5% by weight, the further monomers (d) in an amount of 2% to 30% by weight, and the glycidyl (meth)acrylate in an amount of 0.1% to 5% by weight.

7. The pressure-sensitive adhesive dispersion according to any of the preceding claims, wherein the dispersion comprises additives selected from fillers, dyes, flow control assistants, thickeners, defoamers, plasticizers, pigments, wetting agents, UV protectants, and tackifiers.

8. The pressure-sensitive adhesive dispersion according to any of the preceding claims, wherein the polymer P2 is formed by polymerization from a monomer mixture comprising the monomers (a), the monomers (c), glycidyl (meth)acrylate, and optionally the monomers (d), in the amounts specified for polymer P1.

9. The pressure-sensitive adhesive dispersion according to any of the preceding claims, wherein the preparation of the polymer P1 takes place in at least two stages, the amount of monomer (b) in a first polymerization stage being greater than the amounts of glycidyl (meth)acrylate, and in a later polymerization stage the amount of monomer (b) being less than the amount of glycidyl (meth)acrylate.

10. An adhesive tape which has at least one carrier layer and is coated on one or both sides with at least one pressure-sensitive adhesive dispersion according to any of the preceding claims.

11. The adhesive tape according to the preceding claim, wherein the applied weight of the pressure-sensitive adhesive dispersion, based on solids content, is at least 30 g/m².

12. The adhesive tape according to either of the two preceding claims, wherein the material of the carrier layer is selected from polyethylene, oriented polypropylene, polyethylene terephthalate, PE foam, and polyurethane foam, and/or the adhesive tape has at least one detachable protective layer lining the layer of adhesive.

13. The use of a pressure-sensitive adhesive dispersion according to any of claims 1 to 9 for producing self-adhesive articles.

14. The use of a pressure-sensitive adhesive dispersion according to any of claims 1 to 9 or of an adhesive tape according to any of claims 10 to 12 for fixing components, more particularly in automobile construction, for electronics articles or in construction applications.

## Revendications

1. Dispersion d'adhésif sensible à la pression, contenant au moins un polymère P1 dispersé dans de l'eau, qui est formé par polymérisation en émulsion à partir d'un mélange de monomères, contenant :
(a) au moins 60 % en poids d'au moins un (méth)acrylate d'alkyle en C4 à C20 qui, lorsqu'il est polymérisé sous la forme d'un homopolymère, présente une température de transition vitreuse de -30 °C ou moins,
(b) au moins 0,05 % en poids d'au moins un monomère de (méth)acrylate contenant un substituant de formule 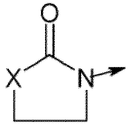 dans laquelle X représente CH₂, O, NH ou NR, et R représente un groupe alkyle en C1 à C4,
(c) au moins 0,1 % en poids d'au moins un monomère acide,
le mélange de monomères contenant au moins 0,05 % en poids de (méth)acrylate de glycidyle et/ou
la dispersion d'adhésif sensible à la pression contenant au moins un autre polymère P2, différent du polymère P1, qui comprend des groupes glycidyle,
les indications des quantités de monomères se rapportant à chaque fois à la somme de tous les monomères.

2. Dispersion d'adhésif sensible à la pression selon la revendication 1, **caractérisée en ce que** les monomères (a) sont choisis parmi l'acrylate de n-butyle, l'acrylate de n-hexyle, l'acrylate d'octyle et l'acrylate de 2-éthylhexyle, ainsi que les mélanges de ces monomères.

3. Dispersion d'adhésif sensible à la pression selon l'une quelconque des revendications précédentes, **caractérisée en ce que** le monomère (b) est le méthacrylate d'uréidoéthyle.

4. Dispersion d'adhésif sensible à la pression selon l'une quelconque des revendications précédentes, **caractérisée en ce que** les monomères acides (c) sont choisis parmi l'acide acrylique et l'acide méthacrylique.

5. Dispersion d'adhésif sensible à la pression selon l'une quelconque des revendications précédentes, **caractérisée en ce que** le mélange de monomères contient d'autres monomères (d), choisis parmi les (méth)acrylates d'alkyle en C1 à C20 différents des monomères (a), les (méth)acrylates d'hydroxyalkyle en C1 à C20, les esters vinyliques d'acides carboxyliques contenant jusqu'à 20 atomes C, les composés aromatiques de vinyle contenant jusqu'à 20 atomes C, les nitriles éthyléniquement insaturés, les halogénures de vinyle, les éthers vinyliques d'alcools contenant 1 à 10 atomes C, les hydrocarbures aliphatiques contenant 2 à 8 atomes C et une ou deux doubles liaisons ou les mélanges de ces monomères.

6. Dispersion d'adhésif sensible à la pression selon l'une quelconque des revendications précédentes, **caractérisée en ce que** les monomères (a) sont présents en une quantité de 60 à 95 % en poids, les monomères (b) en une quantité de 0,1 à 5 % en poids, les monomères (c) en une quantité de 0,1 à 5 % en poids, les autres monomères (d) en une quantité de 2 à 30 % en poids et le (méth)acrylate de glycidyle en une quantité de 0,1 à 5 % en poids.

7. Dispersion d'adhésif sensible à la pression selon l'une quelconque des revendications précédentes, **caractérisée en ce que** la dispersion contient des additifs, choisis parmi les charges, les colorants, les adjuvants d'écoulement, les épaississants, les agents antimousse, les plastifiants, les pigments, les agents mouillants, les agents de protection contre les UV et les agents collants.

8. Dispersion d'adhésif sensible à la pression selon l'une quelconque des revendications précédentes, **caractérisée en ce que** le polymère P2 est formé par polymérisation à partir d'un mélange de monomères, contenant les monomères (a), les monomères (c), du (méth)acrylate de glycidyle et éventuellement les monomères (d) en les quantités indiquées pour le polymère P1.

9. Dispersion d'adhésif sensible à la pression selon l'une quelconque des revendications précédentes, **caractérisée en ce que** la fabrication du polymère P1 a lieu au moins en deux étapes, lors d'une première étape de polymérisation, la quantité de monomère (b) étant supérieure à la quantité de (méth)acrylate de glycidyle et, lors d'une étape de polymérisation ultérieure, la quantité de monomère (b) étant inférieure à la quantité de (méth)acrylate de glycidyle.

10. Bande adhésive qui comprend au moins une couche support et qui est revêtue sur un ou les deux côtés avec au moins une dispersion d'adhésif sensible à la pression selon l'une quelconque des revendications précédentes.

11. Bande adhésive selon la revendication précédente, **caractérisée en ce que** le poids relatif à la teneur en solides de la dispersion d'adhésif sensible à la pression appliquée est d'au moins 30 g/m².

12. Bande adhésive selon l'une quelconque des deux revendications précédentes, **caractérisée en ce que** le matériau de la couche support est choisi parmi le polyéthylène, le polypropylène orienté, le polyéthylène téréphtalate, la mousse de PE et la mousse de polyuréthane, et/ou la bande adhésive comprend au moins une couche de protection amovible, recouvrant la couche d'adhésif.

13. Utilisation d'une dispersion d'adhésif sensible à la pression selon l'une quelconque des revendications 1 à 9 pour la fabrication d'articles auto-adhésifs.

14. Utilisation d'une dispersion d'adhésif sensible à la pression selon l'une quelconque des revendications 1 à 9 ou d'une bande adhésive selon l'une quelconque des revendications 10 à 12 pour la fixation de composants, notamment dans la construction d'automobiles, pour des articles électroniques ou dans des applications de construction.
